# EUROPEAN PATENT SPECIFICATION

(11) **EP 3 944 572 B1**
(45) Date of publication and mention of the grant of the patent: **19.07.2023**
(21) Application number: 21204005.9
(22) Date of filing: 21.10.2021
(51) Int. Cl.: H04L 12/46

(54) **INFORMATION INTERACTION METHOD AND APPARATUS, ELECTRONIC DEVICE AND STORAGE MEDIUM**
INFORMATIONSINTERAKTIONSVERFAHREN UND -EINRICHTUNG, ELEKTRONISCHE VORRICHTUNG UND SPEICHERMEDIUM
PROCÉDÉ ET APPAREIL D'INTERACTION D'INFORMATIONS, DISPOSITIF ÉLECTRONIQUE ET SUPPORT D'ENREGISTREMENT

(30) Priority: 23.11.2020 CN 202011323219
(43) Date of publication of application: 26.01.2022
(73) Proprietor: Apollo Intelligent Connectivity (Beijing) Technology Co., Ltd., Beijing 100176 (CN)
(72) Inventor: CAI, Wenxiong, Beijing, 100176 (CN)
(74) Representative: Maiwald GmbH

(56) References cited:
- US-A1- 2015 277 821
- US-A1- 2019 372 799
- US-A1- 2020 244 657

## Description

### TECHNICAL FIELD

Embodiments of the disclosure generally relates to the field of computer technology, and in particular to the field of artificial intelligence, Internet of Things, and voice processing technologies.

### BACKGROUND

In recent years, information interaction based on the Internet of Things (IoT) has gradually become one of the important research directions with the rise of the IoT technology. Taking a vehicle-home interaction application scenario based on the IoT as an example, a remote control to various smart home devices such as an audio and video equipment, a lighting equipment and a security system may be achieved through the vehicle-home interaction in the process of driving the vehicle by a driver and passenger.

However, the information interaction methods in the prior art often have problems such as the cumbersome operation and long time-consuming problems. Therefore, how to improve the efficiency of information interaction has become one of the important research directions.

US 2019372799 A1 discloses a device control method.

### SUMMARY

The embodiments of the disclosure provide an information interaction method and apparatus, an electronic device and a storage medium.

According to a first aspect of the disclosure, an information interaction method is defined in amended claim 1.

According to a second aspect of the disclosure, an information interaction method is defined in amended claim 5.

According to a third aspect of the disclosure, an information interaction apparatus is defined in amended claim 9.

According to a fourth aspect of the disclosure, an electronic device includes at least one processor and a memory communicatively coupled to the at least one processor. The memory is stored with instructions executable by the at least one processor, and the instructions are executed by the at least one processor, the at least one processor is caused to execute the information interaction method according to the first and second aspect of the disclosure.

According to a fifth aspect of the disclosure, a non-transitory computer-readable storage medium having computer instructions stored thereon is provided. The computer instructions are configured to cause a computer to execute the information interaction method according to the first and second aspect of the disclosure.

According to a sixth aspect of the disclosure, a computer program product is provided. When instructions in the computer program product are executed by a processor, the information interaction method according to the first and second aspect of the disclosure is implemented.

It should be understood that the content described in this section is not intended to identify key or important features of the embodiments of the disclosure, nor is intended to limit the scope of the disclosure. Additional features of the disclosure will become easily understood based on the following description.

### BRIEF DESCRIPTION OF THE DRAWINGS

The drawings herein are used to better understand the solution and do not constitute a limitation to the disclosure.
FIG. 1 is a schematic diagram according to a first embodiment of the disclosure.
FIG. 2 is a schematic diagram according to a second embodiment of the disclosure.
FIG. 3 is a schematic diagram according to a third embodiment of the disclosure.
FIG. 4 is a schematic diagram according to a fourth embodiment of the disclosure.
FIG. 5 is a schematic diagram of a process for determining by an on-board device the interaction intention of the driver and passenger.
FIG. 6 is a schematic diagram of a process for receiving by an Internet of Things platform a vehicle-home interaction request.
FIG. 7 is a schematic diagram according to a fifth embodiment of the disclosure.
FIG. 8 is a schematic diagram according to a sixth embodiment of the disclosure.
FIG. 9 is a schematic diagram according to a seventh embodiment of the disclosure.
FIG. 10 is a schematic diagram according to an eighth embodiment of the disclosure.
FIG. 11 is a schematic diagram according to a ninth embodiment of the disclosure.
FIG. 12 is a schematic diagram according to a tenth embodiment of the disclosure.
FIG. 13 is a schematic diagram according to an eleventh embodiment of the disclosure.
FIG. 14 is a schematic diagram according to a twelfth embodiment of the disclosure.
FIG. 15 is a schematic diagram according to a thirteenth embodiment of the disclosure.
FIG. 16 is a block diagram of an information interaction apparatus configured to implement the information interaction method according to an embodiment of the disclosure.
FIG. 17 is a block diagram of an information interaction apparatus configured to implement the information interaction method according to an embodiment of the disclosure.
FIG. 18 is a block diagram of an information interaction apparatus configured to implement the information interaction method according to an embodiment of the disclosure.
FIG. 19 is a block diagram of an information interaction apparatus configured to implement the information interaction method according to an embodiment of the disclosure.
FIG. 20 is a block diagram of an information interaction apparatus configured to implement the information interaction method according to an embodiment of the disclosure.
FIG. 21 is a block diagram of an information interaction apparatus configured to implement the information interaction method according to an embodiment of the disclosure.
FIG. 22 is a block diagram of an information interaction apparatus configured to implement the information interaction method according to an embodiment of the disclosure.
FIG. 23 is a block diagram of an information interaction apparatus configured to implement the information interaction method according to an embodiment of the disclosure.
FIG. 24 is a block diagram of an information interaction apparatus configured to implement the information interaction method according to an embodiment of the disclosure.
FIG. 25 is a block diagram of an information interaction apparatus configured to implement the information interaction method according to an embodiment of the disclosure.
FIG. 26 is a block diagram of an electronic device configured to implement the information interaction in an embodiment of the disclosure.

### DETAILED DESCRIPTION

Example embodiments of the disclosure are described below with reference to the accompanying drawings, which include various details of the embodiments of the disclosure to facilitate understanding, and should be considered as merely exemplary. Therefore, those skilled in the art should recognize that various changes and modifications may be made to the embodiments described herein without departing from the scope of the disclosure. For clarity and conciseness, descriptions of well-known functions and structures are omitted in the following description.

The technical fields involved in the solution of the disclosure are briefly described below.

The artificial intelligence (AI) is a subject that causes a computer to simulate certain thinking processes and intelligent behaviors (such as learning, reasoning, thinking, planning, etc.) of human beings, which covers both hardware-level technologies and software-level technologies. The AI hardware technologies generally include a computer vision technology, a voice recognition technology, a natural language processing technology, and several aspects such as learning/deep learning, big data processing technology, a knowledge graph technology, etc.

The Internet of Things (IoT) refers to a network that achieves ubiquitous connections between things and things as well as between things and human people by collecting in teal time various kinds of information required for any object or process that needs to be monitored, connected and interacted via various possible network accesses, using various devices and technologies such as various information sensors, a radio frequency identification technology, a global positioning system, an infrared sensor, an ultra-wide scanner, thereby achieving intelligent perception, recognition and management of objects and processes.

The speech signal processing technology is a general term for various processing techniques that study the speech generation process, statistical characteristics of speech signals, automatic speech recognition, machine synthesis, and speech perceptions. Since the modern sound processing technologies are based on digital calculations and implemented with the aid of microprocessors, signal processors or general-purpose computers. It is also called a digital speech signal processing technology.

An information interaction method and apparatus, an electronic device, and a storage medium of the embodiments of the disclosure are described below with reference to the accompanying drawings.

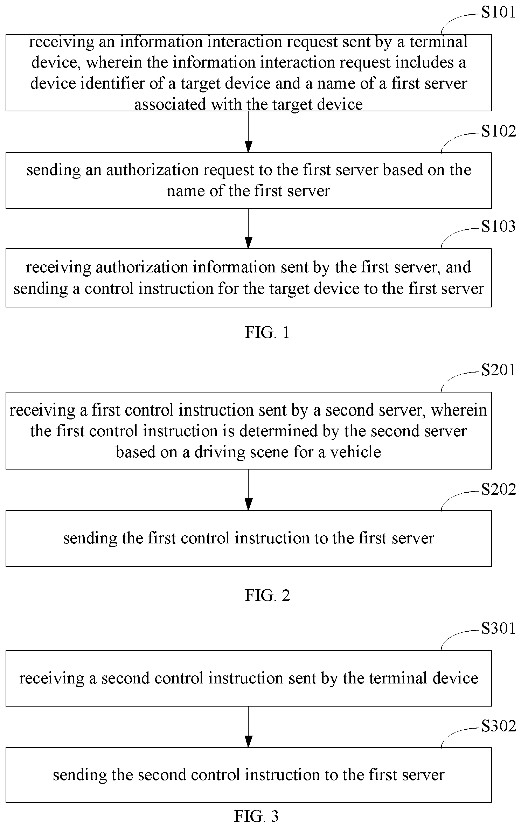

FIG. 1 is a schematic diagram according to a first embodiment of the disclosure. It should be noted that the execution object of the information interaction method in the embodiment is an Internet of Things (IoT) platform.

As illustrated in FIG. 1, the information interaction method according to the embodiment includes the following blocks.

At block S 101, an information interaction request sent by a terminal device is received. The information interaction request includes a device identifier of a target device and a name of a first server associated with the target device.

In the embodiment of the disclosure, the driver and passenger may express different information interaction intentions by performing different operations. Correspondingly, the terminal device may send different information interaction requests based on different interaction intentions of the driver and passenger. Correspondingly, the IoT platform may receive the information interaction requests sent by the terminal device.

At block S 102, an authorization request is sent to a first server based on the name of the first server.

In the embodiment of the disclosure, after the information interaction request is received, the device identifier of the target device and the name of the first server associated with the target device may be extracted therefrom, and then the authorization request is sent to the first server based on the name of the first server. Correspondingly, the first server may receive the authorization request. Optionally, the first server may detect authorization request data for the authorization request to determine whether to accept the authorization request.

It should be noted that, there are no limitations to the basis for the first server to determine whether to accept the authorization request and the specific manner in which the first server processes the authorization request in the disclosure, which may be selected according to actual situations. For example, the first server may send a login account obtaining request to the IoT platform, and when it is determined that the login account that logs in to the IoT platform is an authorized account, the authorization request may be accepted.

At block S103, authorization information sent by the first server is received, and a control instruction for the target device is sent to the first server.

In the embodiment of the disclosure, the first server may send the authorization information to the IoT platform. Correspondingly, the IoT platform may receive the authorization information and send the control instruction for the target device to the first server.

Correspondingly, the first server associated with the target device may receive the control instruction for the target device, and issue a control instruction to the corresponding target device.

According to the information interaction method of the embodiment of the disclosure, the IoT platform may receive the information interaction request sent by the terminal device, and send the authorization request to the first server based on the name of the first server, receive the authorization information sent by the first server, and send the control instruction for the target device to the first server, thereby achieving the information interaction. The IoT platform is enabled to integrate multiple first servers associated with the target device, and support the target devices belonging to different first servers at the same time, thereby achieving the cross-server information interaction, avoiding the cumbersome operation and long time-consuming problems in the existing information interaction processes, improving the efficiency of information interaction, and enhancing user experience. Furthermore, the number of controllable smart home devices may be rapidly expanded with the existing servers.

Further, the IoT platform may receive the control instruction sent by the second server and send it to the first server.

As a possible implementation, as illustrated in FIG. 2, the method specifically includes the following blocks on the basis of the above embodiments.

At block S201, a first control instruction sent by a second server is received. The first control instruction is determined by the second server based on a driving scene for a vehicle.

At block S202, the first control instruction is sent to the first server.

Further, the IoT platform may receive the control instruction sent by the terminal device and send it to the first server.

As a possible implementation, as illustrated in FIG. 3, the method specifically includes the following blocks on the basis of the above embodiments.

At block S301, a second control instruction sent by a terminal device is received.

At block S302, the second control instruction is sent to the first server.

It should be noted that, in this embodiment of the disclosure, after the control instruction for the target device is tried to be sent to the first server, the state information of the target device fed back by the first server may be received and the state information may be sent to the terminal device.

Taking a vehicle-home interaction application scenario based on the IoT as an example, the information interaction method according to the embodiment is explained below.

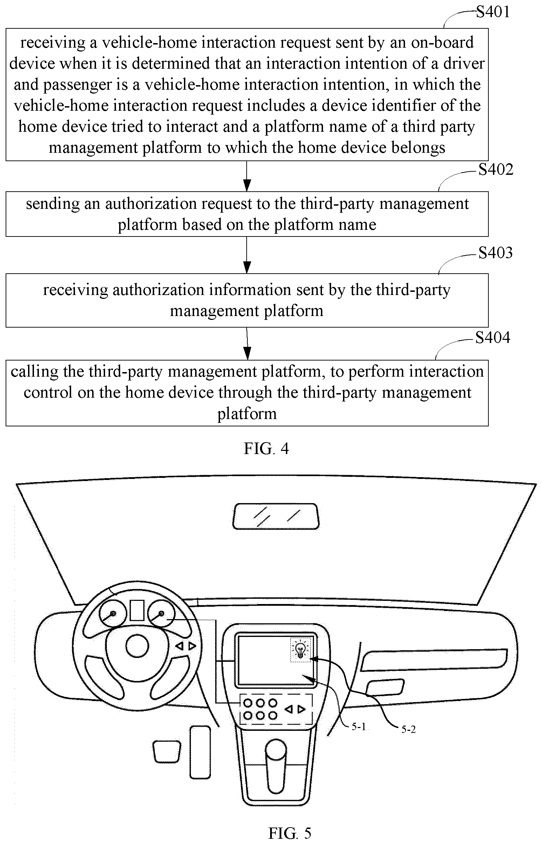

FIG. 4 is a schematic diagram of a fourth embodiment according to the disclosure. As illustrated in FIG. 4, the information interaction method according to the embodiment includes the following blocks.

At block S401, a vehicle-home interaction request is received, which is sent by an on-board device when it is determined that an interaction intention of a driver and passenger is a vehicle-home interaction intention. The vehicle-home interaction request includes a device identifier of the home device tried to interact and a platform name of a third party management platform to which the home device belongs.

In the embodiment of the disclosure, the on-board device is a terminal device, and the home device is a target device.

In the embodiment of the disclosure, the third-party management platform is considered as the first server, and a server of an Internet of Vehicles (IoV) is considered as the second server.

In the embodiment of the disclosure, when the on-board device determines that the interaction intention of the driver and passenger is the vehicle-home interaction intention, the vehicle-home interaction request may be sent to the IoT platform. Correspondingly, the IoT platform may receive the vehicle-home interaction request sent by the on-board device.

The on-board device may be devices such as a vehicle-mounted multimedia equipment, a central control steering wheel equipped with vehicle-home interaction function buttons, etc.

The interaction intention of the driver and passenger may be a vehicle-to-vehicle interaction intention, such as an interaction intention that attempts to share charging with other vehicles; it may also be a vehicle-home interaction intention, such as an interaction intention that attempts to control smart home devices at home.

The vehicle-home interaction intention may be an intention to interact with a home device. For example, it may be a vehicle-home interaction intention for controlling home devices such as air conditioners and lighting equipment at home.

It should be noted that the driver and passenger may express different interaction intentions by performing different operations. For example, the driver and passenger may express the vehicle-home interaction intention by triggering a vehicle-home interaction request control presented on a display interface of the on-board device. For another example, the driver and passenger may express the vehicle-vehicle interaction intention by triggering a vehicle-vehicle interaction request control presented on the display interface of the on-board device.

Correspondingly, the on-board device may send different requests based on the different interaction intentions of the driver and passenger. For example, when the interaction intention of the driver and passenger is the vehicle-home interaction intention, the on-board device may send the vehicle-home interaction request. For another example, when the interaction intention of the driver and passenger is the vehicle-vehicle interaction intention, the on-board device may send the vehicle-vehicle interaction request such as a shared charging request, etc.

Further, the on-board device may determine an operation object based on the interaction intention of the driver and the passenger. The operation object may be any controllable home device, such as a lighting equipment, a heating equipment, a washing equipment, a socket, etc.

For example, as illustrated in FIG. 5, when the driver and passenger try to turn on the lighting equipment at home, the vehicle-home interaction request control 5-2 presented on the display interface 5-1 of the on-board device may be triggered. At this time, the on-board device may determine that the interaction intention of the driver and passenger is the vehicle-home interaction intention and the operation object is the lighting equipment, and send the vehicle-home interaction request to the IoT platform.

In the embodiment of the disclosure, the vehicle-home interaction request includes the device identifier of the home device tried to interact, and the platform name of the third-party management platform to which the home device belongs.

It should be noted that, the vehicle-home interaction intentions of the driver and passenger may be vehicle-home interaction intentions for different home devices. In this way, the third-party management platforms to which different home devices belong may also be different. For example, the vehicle-home interaction intention of the driver and passenger may be vehicle-home interaction intentions for the lighting equipment at home. In this case, the third-party management platform to which the lighting equipment belongs may be a platform A designated by the lighting equipment manufacturer. For another example, the vehicle-home interaction intention of the driver and passenger may be the vehicle-home interaction intention for the heating equipment at home. In this case, the third-party management platform to which the heating equipment belongs may be a platform B designated by the heating equipment manufacturer.

Therefore, different vehicle-home interaction requests also include device identifiers of different home devices tried to interact, and platform names of the third-party management platforms to which different home devices belong. Correspondingly, the device identifier and platform name included in the vehicle-home interaction request received by the IoT platform are also different.

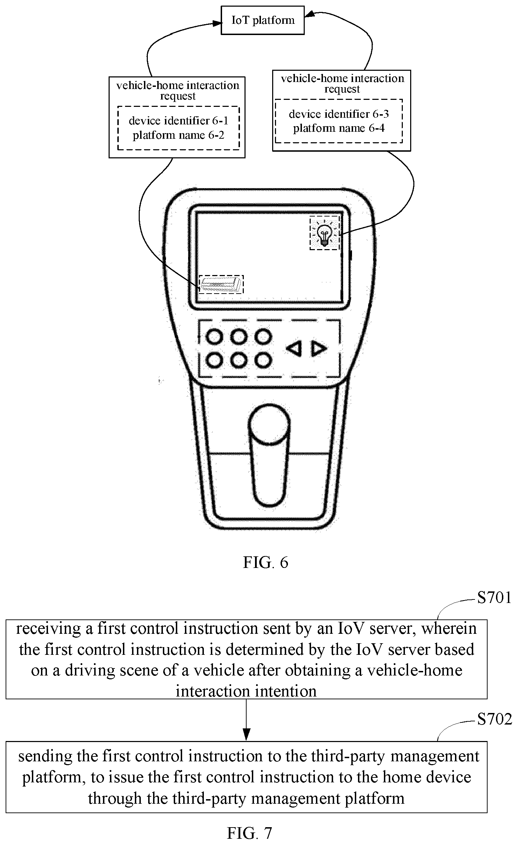

For example, as illustrated in FIG. 6, when the driver and passenger try to turn on the lighting equipment A at home, the IoT platform may receive the device identifier 6-1 of the lighting equipment A and the name 6-2 of the Platform A corresponding to the lighting equipment A, which are sent by the on-board device. When the driver and passenger try to turn on the heating equipment B at home, the IoT platform may receive the device identifier 6-3 of the heating equipment B and the name 6-4 of the platform B corresponding to the heating equipment B, which are sent by the on-board device.

At block S402, an authorization request is sent to the third-party management platform based on the platform name.

In the embodiment of the disclosure, after the vehicle-home interaction request is received, the platform name of the third-party management platform to which the home device belongs may be extracted, and the authorization request is sent to the corresponding third-party management platform based on the platform name. Correspondingly, the third-party management platform may receive the authorization request. Optionally, the third-party management platform may detect authorization request data for the authorization request to determine whether to accept the authorization request.

It should be noted that, there are no limitations to the basis for the third-party management platform to determine whether to accept the authorization request and the specific manner in which the third-party management platform processes the authorization request in the disclosure, which may be selected according to actual situations. For example, the third-party management platform may send a login account obtaining request to the IoT platform, and when it is determined that the login account that logs in to the IoT platform is an authorized account, the authorization request may be accepted.

At block S403, authorization information sent by the third-party management platform is received.

In the embodiment of the disclosure, after the third-party management platform receives the authorization request sent by the IoT platform, i.e., after the third-party management platform allows the authorization, the authorization information may be sent to the IoT platform. Correspondingly, the IoT platform may receive authorization information sent by the third-party management platform.

At block S404, the third-party management platform is called to perform interaction control on the home device through the third-party management platform.

In the embodiment of the disclosure, after the IoT platform receives the authorization information sent by the third-party management platform, the third-party management platform may be called to perform interaction control on the home device through the third-party management platform. Correspondingly, the corresponding third-party management platform may respond to the calling from the IoT platform and issue control instructions to the corresponding home device.

For example, after the authorization information sent by the third-party management platform A is received, the IoT platform may call the third-party management platform A, to perform interaction control on the lighting equipment belonging to the platform A through the third-party management platform A. After the authorization information sent by the third-party management platform B is received, the IoT platform may call the third-party management platform B, to perform interaction control on the heating equipment belonging to the platform B through the third-party management platform B.

According to the information interaction method of the embodiment of the disclosure, the IoT platform may communicate with the corresponding third-party management platform based on the received information interaction request and call the corresponding third-party management platform, thereby achieving information interaction. The IoT platform is enabled to integrate multiple third-party management platforms, and support home devices belonging to different third-party management platforms at the same time, thereby achieving the cross-platform information interaction, avoiding the cumbersome operation and long time-consuming problems in the existing information interaction process, improving the efficiency of information interaction and enhancing user experience. Furthermore, the number of controllable smart home devices may be rapidly expanded with the existing platforms.

It should be noted that in the disclosure, the IoT platform may send the first control instructions determined based on the driving scenes for different vehicles to the third-party management platform, to perform interaction control on the home device through the third-party management platform.

FIG. 7 is a schematic diagram of a fifth embodiment according to the disclosure. As illustrated in FIG. 7, the information interaction method according to the embodiment includes the following blocks on the basis of the above embodiment.

At block S701, a first control instruction sent by an IoV server is received. The first control instruction is determined by the IoV server based on a driving scene of a vehicle after obtaining a vehicle-home interaction intention.

It should be noted that, the vehicle-home interaction request sent by the on-board device and received by the IoT platform may be configured to instruct the third-party management platform to perform instant vehicle-home interaction with the home device, for example, the lighting equipment at home may be turned on immediately, or configured to instruct the third-party management platform to perform delayed vehicle-home interaction with the home device, for example, the home lighting equipment may be turned on after a distance from the home is less than a preset distance.

In the embodiments of the disclosure, smarter vehicle-home interaction may be achieved by the IoV server. Optionally, the IoV server may determine the first control instruction based on the driving scene of the vehicle after obtaining the vehicle-home interaction intention, and send the first control instruction to the IoT platform. Correspondingly, the IoT platform may receive the first control instruction sent by the IoV server.

The driving scene of the vehicle may include: a going-home scene, a leaving-home scene, and so on.

It should be noted that, the first control instructions determined by the IoV server are also different for different driving scenes of vehicles. For example, if the driving scene of the vehicle is a leaving-home scene, the first control instruction determined by the IoV server may be to control the home device to enter a leaving-home control mode; if the driving scene of the vehicle is a going-home scene, the first control instruction determined by the IoV server may be to control the home device to enter a going-home control mode.

It should be noted that, there are no limitations to the specific manner in which the IoV server determines the driving scene of the vehicle in the disclosure, which it may be set according to actual situations.

Optionally, the IoV server may determine the driving scene of the vehicle based on an electronic fence function. The electronic fence refers to setting and planning a region to have a similar effect as a fence. The fence is bounded to the related device to obtain a situation where the device is in and out of the fence. For example, it may be obtained whether the device enters the fence, a specific time when the device enters the fence, whether the device leaves the fence, a specific time when the device leaves the fence, and a duration when the device stays in the fence, etc.

It should be noted that, the coverage region of the electronic fence may be preset according to actual situations. For example, the preset coverage region of the electronic fence may be the parking lot of a community where the driver and passenger live. In this case, the IoV server may determine whether the vehicle has left the parking lot based on the electronic fence function, and determine the driving scene of the vehicle is in the leaving-home scene after the vehicle leaves the parking lot.

Optionally, the IoV server may determine the driving scene of the vehicle in a map positioning way. The map positioning way refers to a way of determining the driving scene of the vehicle by obtaining a change of the position where the vehicle is located within a preset time period. The preset time period may be set according to actual situations, such as 10 minutes, 15 minutes, and so on.

For example, if it is obtained that the position where the vehicle is located is gradually approaching to the position of the cell where the driver and passenger live within 10 minutes, it may be determined that the driving scene of the vehicle is in a going-home scene.

At block S702, the first control instruction is sent to the third-party management platform, to issue the first control instruction to the home device through the third-party management platform.

In the embodiment of the disclosure, after receiving the first control instruction sent by the IoV server, the IoT platform may send the first control instruction to the third-party management platform. Correspondingly, the third-party management platform may receive the first control instruction and issue the first control instruction to the home device for controlling the home device to operate based on the first control instruction.

According to the information interaction method of the embodiment of the disclosure, the first control instruction sent by the IoV server may be received, and the first control instruction may be sent to the third-party management platform, so as to issue the first control instruction to the home device through the third-party management platform, thereby achieving the purpose of entering different vehicle-home interaction modes based on different driving scenes of the vehicle, improving the adaptability and intelligence in the vehicle-home interaction process, and further enhancing user experience.

It should be noted that, the IoT platform in the disclosure may send different second control instructions based on the active input of the driver and passenger to the third-party management platform, so as to perform further interaction control on the home device through the third-party management platform.

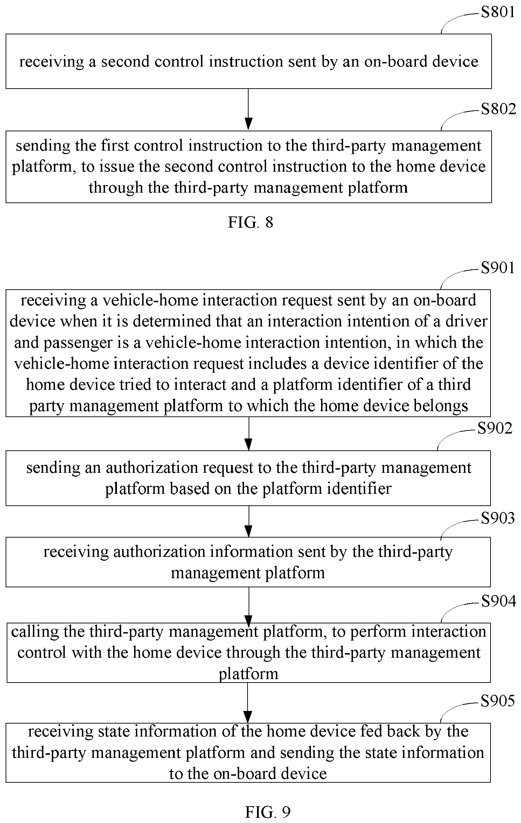

FIG. 8 is a schematic diagram of an example which is not part of the invention. As illustrated in FIG. 8, the information interaction method according to the example includes the following blocks on the basis of the above example.

At block S801, a second control instruction sent by an on-board device is received.

In the example of the disclosure, the on-board device may obtain the control instructions issued by the driver and passenger, such as voice control instructions, text control instructions, etc., determine the control instruction issued by the driver and passenger as the second control instruction, and send it to the IoT platform. Correspondingly, the IoT platform may receive the second control instruction sent by the on-board device.

The control instruction issued by the driver and passenger may be any specific control instruction for the corresponding operation object, for example, a control instruction for switching the operation mode of an air conditioner, a control instruction for increasing the set temperature of a heating equipment, etc..

At block S802, the first control instruction is sent to the third-party management platform, to issue the second control instruction to the home device through the third-party management platform.

The block S802 is the same as the block S702 in the above example, which will not be repeated here.

According to the information interaction method of the example of the disclosure, the second control instruction sent by the on-board device may be received, and the second control instruction may be sent to the third-party management platform, so as to issue the second control instruction to the home device through the third-party management platform, thereby ensuring that a way of controlling the home device may match the requirements for the driver and passenger, improving the adaptability and intelligence in the vehicle-home interaction process between the car and the car, and further enhancing user experience.

FIG. 9 is a schematic diagram of a seventh embodiment according to the disclosure. As illustrated in FIG. 9, the information interaction method according to the embodiment includes the following blocks on the basis of the above embodiment.

At block S901, a vehicle-home interaction request is received, which is sent by an on-board device when it is determined that an interaction intention of a driver and passenger is a vehicle-home interaction intention. The vehicle-home interaction request includes a device identifier of the home device tried to interact and a platform name of a third party management platform to which the home device belongs.

At block S902, an authorization request is sent to the third-party management platform based on the platform name.

At block S903, authorization information sent by the third-party management platform is received.

At block S904, the third-party management platform is called to interactionly control the home device through the third-party management platform.

The blocks S901 to S904 are the same as the blocks S401 to S404 in the above embodiment, which will not be repeated here.

After block S404 in the above embodiment, the following block S905 may be included.

At block S905, state information of the home device fed back by the third-party management platform is received and sent to the on-board device.

In the embodiment of the disclosure, after the third-party management platform sends control instructions to the corresponding home device, the third-party management platform may feed the state information of the home device back to the IoT platform in real time or in a preset period. Correspondingly, the IoT platform may receive the state information of the home device fed back by the third-party management platform, and send the state information to the on-board device. The preset period may be set according to actual conditions, for example, 1 minute, 5 minutes, etc.

The specific types of state information of the home device are not limited in the disclosure. For example, the state information may include at least one of the following information: an operating mode of the home device, environmental information collected by the home device such as the temperature and humidity, a remaining power of the home device, and health state detection results of the home device.

It should be noted that after the IoT platform sends the state information to the on-board device, the on-board device may receive and display the state information, so that the driver and passenger may perform further vehicle-home interaction based on the state information.

For example, after the IoT platform calls the third-party management platform to perform interaction control on an air conditioner through the third-party management platform, the IoT platform may send the current operating mode of the air conditioner to the on-board device, and the on-board device may receive and display the state information on the vehicle multimedia display interface. In this case, if the current operation mode of the air conditioner does not match the vehicle-home interaction intention of the driver and passenger, the vehicle-home interaction may be performed again in order to switch the current operation mode of the air conditioner to a matching operation mode.

For another example, after the IoT platform calls the third-party management platform to perform interaction control on the air conditioner through the third-party management platform, the IoT platform may send the current indoor temperature collected by the air conditioner to the on-board device, and the on-board device may receive and display the state information on the vehicle multimedia display interface. In this case, if the driver and passenger think that the current indoor temperature is still high, the vehicle-home interaction may be further performed in order to reduce the set temperature of the air conditioner.

According to the information interaction method of the embodiment of the disclosure, the IoT platform may receive the state information of the home device fed back by the third-party management platform and send the state information to the on-board device after performing interaction control on the home device through the third-party management platform, so that the driver and passenger may obtain in time the current state of the controlled home device and perform further vehicle-home interaction based on the state information, which improves the effectiveness and reliability of the vehicle-home interaction process, and further improves user experience.

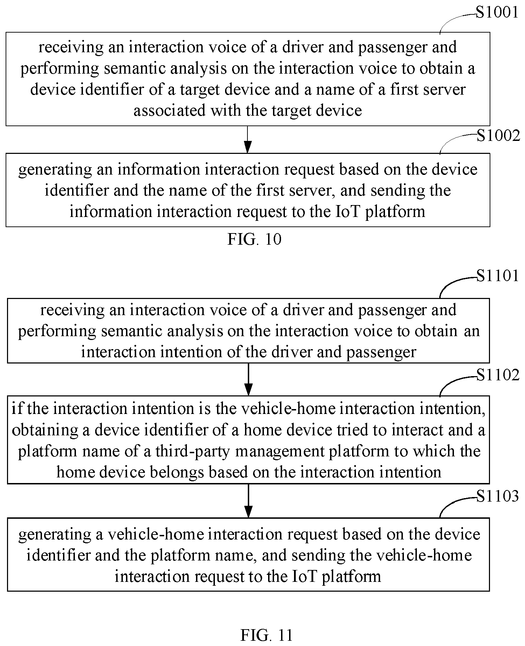

FIG. 10 is a schematic diagram of an example which is not part of the invention. It should be noted that the executive object of the vehicle-home information interaction method in the example is a terminal device. As illustrated in FIG. 10, the information interaction method according to the example includes the following blocks.

At block S1001, an interaction voice of a driver and passenger is received, and semantic analysis is performed on the interaction voice to obtain a device identifier of a target device and a name of a first server associated with the target device.

In the example of the disclosure, the terminal device may receive the interaction voice of the driver and passenger sent by a sound collection device, and may perform semantic analysis on the interaction voice to obtain the device identifier of the target device and the name of the first server associated with the target device.

At block S 1002, an information interaction request is generated based on the device identifier and the name of the first server and is sent to the IoT platform.

In the example of the disclosure, the terminal device may generate the information interaction request based on the device identifier and the platform name, and send it to the IoT platform. Correspondingly, the IoT platform may receive the information interaction request, send an authorization request to the first server based on the platform name, and then receive authorization information sent by the first server, so as to perform interaction control on the target device through the first server.

According to the information interaction method of the example of the disclosure, the terminal device makes full use of the semantic analysis capability through the ways such as natural language understanding and processing to perform semantic analysis on the interaction voice input by the driver and passenger, so as to obtain the device identifier of the target device, the name of the first server associated with the target device. Further, the information interaction request is generated based on the device identifier and platform name and sent to the IoT platform, so that the IoT platform may integrate multiple servers and support target devices belonging to different servers at the same time, thereby achieving the cross-server information interaction.

Further, after the interaction intention of the driver and passenger is obtained, the terminal device may send interaction indication information to the second server, so that the second server determines a first control instruction based on a driving scene for a vehicle. Further, the terminal device may receive control instructions for the target device and send them to the IoT platform

Further, the terminal device may receive state information of the target device fed back by the IoT platform.

Taking an application scenario of vehicle-home interaction based on the IoT as an example, the information interaction method according to the example is explained below.

FIG. 11 is a schematic diagram of an example which is not part of the invention. As illustrated in FIG. 11, the information interaction method according to the example includes the following blocks.

At block S1101, an interaction voice of a driver and passenger is received, and semantic analysis is performed on the interaction voice to obtain an interaction intention of a driver and passenger.

It should be noted that, the driver and passenger may input interaction voices to more safely perform vehicle-home interaction during the driving. The on-board device is equipped with relevant collection devices for collecting voice data, such as sound collection sensors such as pickups. When the driver and passenger input the interaction voice, the sound collection sensor may collect and send the interaction voice to the on-board device.

In the example of the disclosure, the on-board device may receive the interaction voice of the driver and the passenger sent by the sound collection device, and perform semantic analysis on the interaction voice to obtain the interaction intention of the driver and passenger.

It should be noted that, the specific way of performing semantic analysis on the interaction voice to obtain the interaction intention of the driver and passenger is not limited in the disclosure, which may be selected according to actual situations.

Optionally, after receiving the interaction voice of the driver and passenger, the on-board device may perform semantic analysis on the interaction voice based on the natural language understanding (NLU) to obtain the interaction intention of the driver and passenger.

For example, if the interaction voice input by the driver and passenger is "air conditioner, air conditioner, please do me a favor! ", it may be seen through the NLU processing that the interaction intention of the driver and passenger is the vehicle-home interaction intention, and the operating object that the driver and passenger are currently trying to control is the air conditioner. If the interaction voice input by the driver and passenger is "Is there a vehicle nearby that may charge for me? ", it may be seen through the NLU processing that the interaction intention of the driver and passenger is the vehicle-vehicle interaction intention,

At block S 1 102, if the interaction intention is the vehicle-home interaction intention, a device identifier of a home device tried to interact and a platform name of a third-party management platform to which the home device belongs are obtained based on the interaction intention.

In the example of the disclosure, if it is determined that the interaction intention of the driver and passenger is the interaction intention of the vehicle-home, the on-board device may obtain the device identifier of the home device tried to interact and the platform name of the third-party management platform to which the home device belongs based on the interaction intention.

At block S1 103, a vehicle-home interaction request is generated based on the device identifier and the platform name, and is sent to the IoT platform.

In the example of the disclosure, the on-board device may generate a vehicle-home interaction request based on the device identifier and the platform name, and send it to the IoT platform. Correspondingly, the IoT platform may receive the vehicle-home interaction request, send an authorization request to the third-party management platform based on the platform name, receive authorization information sent by the third-party management platform, and call the third-party management platform, so as to perform interaction control on the home device through the third-party management platform.

According to the information interaction method of the example of the disclosure, the on-board device makes full use of the semantic analysis capability, so that the IoT platform may integrate multiple third-party management platforms and support home devices belonging to different third-party management platforms at the same time, thereby achieving the cross-platform vehicle-home interaction.

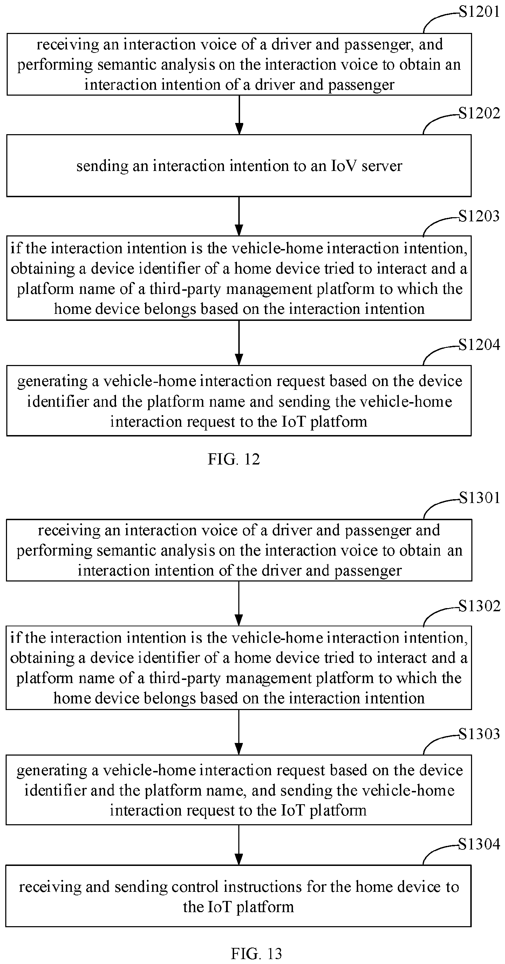

FIG. 12 is a schematic diagram of an example which is not part of the invention. As illustrated in FIG. 12, the information interaction method according to the example includes the following blocks on the basis of the above embodiment.

At block S1201, receiving an interaction voice of a driver and passenger, and performing semantic analysis on the interaction voice to obtain an interaction intention of a driver and passenger.

The block S1201 is the same as the block S1101 in the above embodiment, which will not be repeated here.

After block S1101 in the above embodiment, the method may include the following block S1202.

At block S1202, an interaction intention is sent to the IoV server.

In the example of the disclosure, after receiving the interaction voice of the driver and passenger and performing semantic analysis on the interaction voice to obtain the interaction intention of the driver and passenger, the on-vehicle device may send the interaction intention to the IoV server. Correspondingly, the IoV server may receive the interaction intention, and determine the control instruction based on the interaction intention.

It should be noted that, after obtaining the vehicle-home interaction intention sent by the on-board device, the IoV server may determine a first control instruction based on the driving scene of the vehicle, and send the first control instruction to the IoT platform.

It should be noted that, the specific way of the IoV server determining the driving scene of the vehicle is not limited in the disclosure, which may be set according to actual situations. Optionally, the IoV server may determine the driving scene of the vehicle in a map positioning way. Optionally, the IoV server may determine the driving scene of the vehicle based on the electronic fence function.

At block S 1203, if the interaction intention is the vehicle-home interaction intention, a device identifier of a home device tried to interact and a platform name of a third-party management platform to which the home device belongs are obtained based on the interaction intention

At block S1204, a vehicle-home interaction request is generated based on the device identifier and the platform name, and is sent to the IoT platform.

The blocks S1203 to S1204 are the same as the blocks S1102 to S1103 in the above embodiment, which will not be repeated here.

According to the information interaction method of the embodiment of the disclosure, it is achieved the purpose of operating in different vehicle-home interaction modes based on different driving scenes vehicle, the adaptability and intelligence in the information interaction process are improved, and user experience is further improved.

FIG. 13 is a schematic diagram of an eleventh embodiment according to the disclosure. As illustrated in FIG. 13, the information interaction method according to the embodiment includes the following blocks on the basis of the above embodiment.

At block S1301, an interaction voice of a driver and passenger is received, and semantic analysis is performed on the interaction voice to obtain an interaction intention of a driver and passenger.

At block S 1302, if the interaction intention is the vehicle-home interaction intention, a device identifier of a home device tried to interact and a platform name of a third-party management platform to which the home device belongs are obtained based on the interaction intention.

At block S1303, Generate a vehicle-home interaction request based on the device identifier and the platform name, and send it to the IoT platform.

The blocks S1301 to S1303 are the same as the blocks S1101 to S1103 in the above embodiment, which will not be repeated here.

After block S1103 in the above embodiment, the method may include the following block S1304.

At block 1304, control instructions for the home device are received and sent to the IoT platform.

In the embodiments of the disclosure, the driver and passenger may send the control instructions for home device such as voice control instructions, text control instructions to the on-board device. Correspondingly, the on-board device may receive the control instructions for the home device and send them to the IoT platform.

According to the information interaction method of the embodiment of the disclosure, on the premise of ensuring driving safety, the adaptability and intelligence in the information interaction process may be improved, and user experience may be further improved.

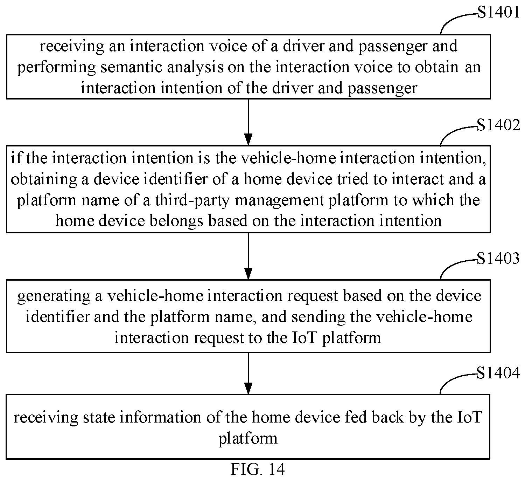

FIG. 14 is a schematic diagram of a twelfth embodiment according to the disclosure. As illustrated in FIG. 14, the information interaction method according to the embodiment includes the following blocks on the basis of the above embodiment.

At block S1401, an interaction voice of a driver and passenger is received, and semantic analysis is performed on the interaction voice to obtain an interaction intention of a driver and passenger.

At block S 1402, if the interaction intention is the vehicle-home interaction intention, a device identifier of a home device tried to interact and a platform name of a third-party management platform to which the home device belongs are obtained based on the interaction intention.

At block S1403, a vehicle-home interaction request is generated based on the device identifier and the platform name, and is sent to the IoT platform.

The blocks S1401 to S 1403 are the same as the blocks S 1101 to S 1103 in the above embodiment, which will not be repeated here.

At block S 1404, state information of the home device fed back by the IoT platform is received.

In the embodiment of the disclosure, after the IoT platform receives the state information of the home device fed back by the third-party management platform, the state information may be sent to the on-board device. Correspondingly, the on-board device may receive the state information of the home device fed back by the IoT platform.

It should be noted that, after the on-board device may receive the state information of the home device fed back by the IoT platform, the state information may be displayed, so that the driver and passengers may perform further vehicle-home interaction based on the state information.

For example, after the IoT platform calls the third-party management platform to perform interaction control on the air conditioner through the third-party management platform, the IoT platform may send the current operating mode of the air conditioner to the on-board device, and the on-board device may receive and display the state information and on the vehicle multimedia display interface. In this case, if the current operation mode of the air conditioner does not match the vehicle-home interaction intention of the driver and passenger, the vehicle-home interaction may be performed again in order to switch the current operation mode of the air conditioner to a matching operation mode.

For another example, after the IoT platform calls the third-party management platform to perform interaction control on the air conditioner through the third-party management platform, the IoT platform may send the current indoor temperature collected by the air conditioner to the on-board device, and the on-board device may receive and display the state information on the vehicle multimedia display interface. In this case, if the driver and passenger think that the current indoor temperature is still high, the vehicle-home interaction may be further performed in order to reduce the set temperature of the air conditioner.

According to the information interaction method of the embodiment of the disclosure, the on-board device may receive the state information of the home device fed back by the IoT platform, so that the driver and passenger may obtain the current state of the controlled home device in time, and perform further vehicle-home interaction based on the state information, which improves the effectiveness and reliability of the vehicle-home interaction process, and further improves user experience.

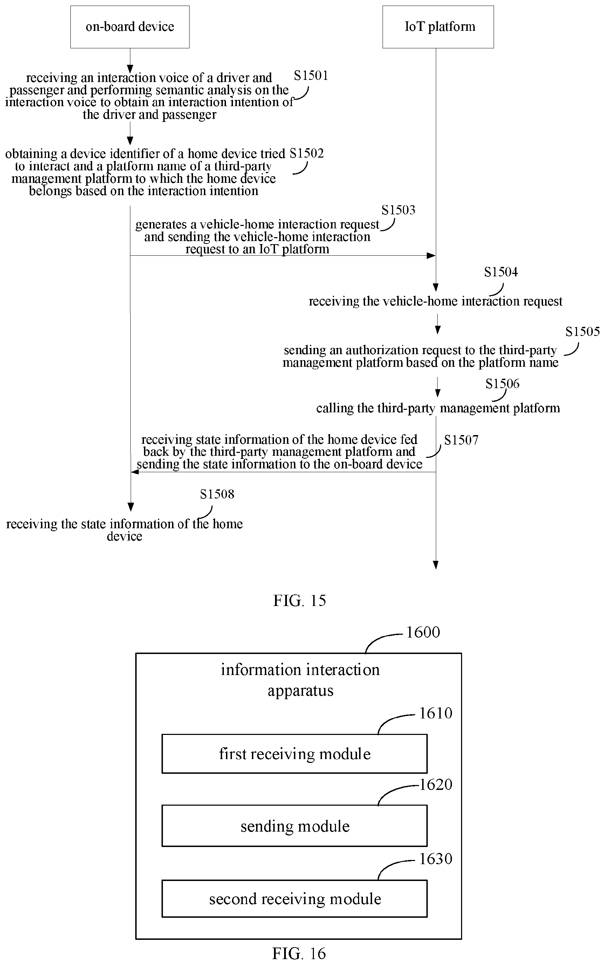

FIG. 15 is a schematic diagram of a thirteenth embodiment according to the disclosure. As illustrated in FIG. 15, taking the whole process of vehicle-home interaction between the IoT platform and the on-board device as an example, the information interaction method according to the embodiment includes the following blocks on the basis of the above embodiments.

At block S1501, an on-board device receives an interaction voice of a driver and passenger, and performs semantic analysis on the interaction voice to obtain an interaction intention of the driver and passenger.

At block S1502, when the interaction intention is a vehicle-home interaction intention, the on-board device obtains a device identifier of a home device tried to interact and a platform name of a third-party management platform to which the home device belongs based on the interaction intention.

At block S1503, the on-board device generates a vehicle-home interaction request based on the device identifier and the platform name, and sends the vehicle-home interaction request to an IoT platform.

At block S1504, the IoT platform receives the vehicle-home interaction request sent by the on-board device when it is determined that the interaction intention of the driver and passenger is the vehicle-home interaction intention. The vehicle-home interaction request includes the device identifier of the home device tried to interact, and the platform name of the third-party management platform to which the home device belongs.

At block S1505, the IoT platform sends an authorization request to the third-party management platform based on the platform name.

At block S1506, the IoT platform calls the third-party management platform to perform interaction control on the home device through the third-party management platform.

At block S1507, the IoT platform receives state information of the home device fed back by the third-party management platform, and sends the state information to the on-board device.

At block S1508, the on-board device receives the state information of the home device fed back by the IoT platform.

It should be noted that, the descriptions of blocks S1501 to S1508 may refer to the relevant records in the above embodiments, which will not be repeated here.

According to the information interaction method of the embodiment of the disclosure, the IoT platform may communicate with the corresponding third-party management platform based on the received vehicle-home interaction request, and call the corresponding third-party management platform. At the same time, the on-board device makes full use of the semantic analysis capabilities through the ways such as natural language understanding and processing to perform semantic analysis on the interaction voice input by the driver and passenger, so as to obtain the interaction intention of the driver and passenger. When it is determined that the interaction intention of the driver and passenger is the vehicle-home interaction intention, it is obtained that the device identifier of the home device tried to interact and the platform name of the third-party management platform to which the home device belongs. The vehicle-home interaction request is then generated based on the device identifier and platform name and sent to the IoT platform, so that the IoT platform may integrate multiple third-party management platforms and support home devices belonging to different third-party management platforms at the same time, thereby achieving the cross-platform vehicle-home interaction, avoiding the cumbersome operation and long time-consuming problems in the existing information interaction process, improving the efficiency of vehicle-home interaction and enhancing user experience. Furthermore, the number of controllable smart home devices may be rapidly expanded with the existing platforms.

Corresponding to the information interaction methods according to several embodiments above, an embodiment of the disclosure also provides an information interaction apparatus. As the information interaction apparatus according to the embodiment of the disclosure corresponds to the information interaction method according to the several embodiments. Therefore, the implementation of the information interaction method is also applicable to the information interaction apparatus according to the embodiment, which will not be described in detail in the embodiment.

FIG. 16 is a structural schematic diagram of an information interaction apparatus according to an embodiment of the disclosure.

As illustrated in FIG. 16, the information interaction apparatus 1600 includes: a first receiving module 1610, a sending module 1620, and a second receiving module 1630. The first receiving module 1610 is configured to receive an information interaction request sent by a terminal device. The information interaction request includes a device identifier of a target device and a name of a first server associated with the target device. The sending module 1620 is configured to send an authorization request to the first server based on the name of the first server. The second receiving module 1630 is configured to receive authorization information sent by the first server, and send a control instruction for the target device to the first server.

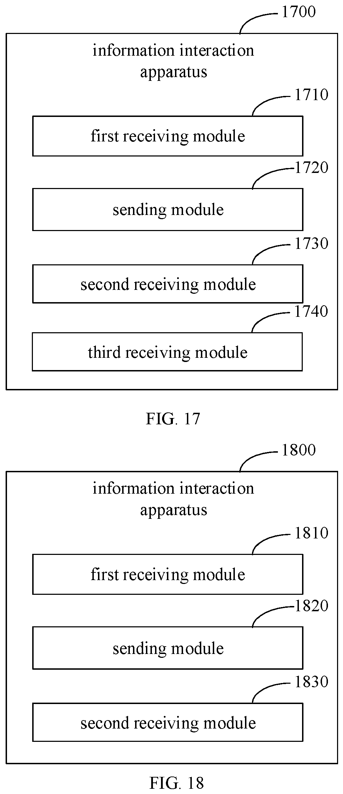

FIG. 17 is a structural schematic diagram of an information interaction apparatus according to another embodiment of the disclosure.

As illustrated in FIG. 17, the information interaction apparatus 1700 includes: a first receiving module 1710, a sending module 1720, a second receiving module 1730, and a third receiving module 1740. The third receiving module 1740 is configured to receive a first control instruction sent by a second server. The first control instruction is determined by the second server based on a driving scene of a vehicle. The sending module 1720 is configured to send the first control instruction to the first server.

It should be noted that the first receiving module 1610 and the second receiving module 1630 have the same function and structure as the first receiving module 1710 and the second receiving module 1730.

FIG. 18 is a structural schematic diagram of an information interaction apparatus according to another embodiment of the disclosure.

As illustrated in FIG. 18, the information interaction apparatus 1800 includes: a first receiving module 1810, a sending module 1820, and a second receiving module 1830. The first receiving module 1810 is configured to receive a second control instruction sent by the terminal device. The sending module 1820 is configured to send the second control instruction to the first server.

It should be noted that the second receiving module 1830 has the same function and structure as the second receiving module 1630.

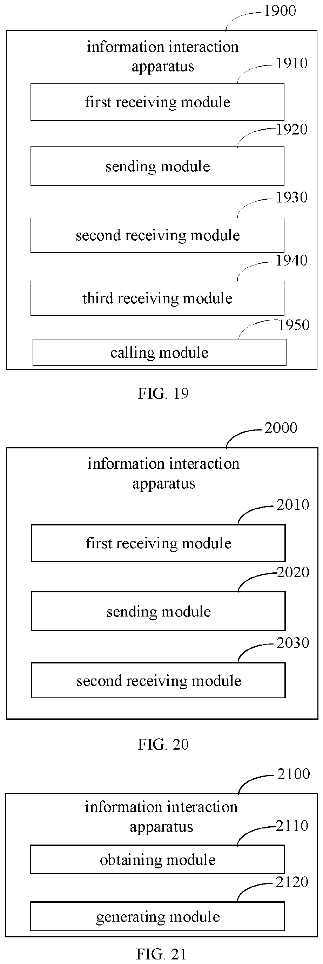

FIG. 19 to FIG. 20 are structural schematic diagrams of an information interaction apparatus according to another embodiment of the disclosure.

As illustrated in FIG. 19, the information interaction apparatus 1900 includes: a first receiving module 1910, a sending module 1920, a second receiving module 1930, a third receiving module 1940 and a calling module 1950. The second receiving module 1930 is configured to receive authorization information sent by the first server, and is further configured to receive state information of the target device fed back by the first server and send the state information to the terminal device . The calling module 1950 is configured to call the third-party management platform to perform interaction control on the target device through the third-party management platform, after receiving the authorization information.

It should be noted that the first receiving module 1910, the sending module 1920, and the third receiving module 1940 have the same function and structure as the first receiving module 1610, the sending module 1620, and the third receiving module 1740.

As illustrated in FIG. 20, the information interaction apparatus 2000 includes: a first receiving module 2010, a sending module 2020, and a second receiving module 2030. The second receiving module 2030 is configured to receive authorization information sent by the first server, and is further configured to receive state information of the target device fed back by the first server and send the state information to the terminal device .

It should be noted that the first receiving module 2010 and the sending module 2020 have the same function and structure as the first receiving module 1610 and the sending module 1620.

According to the information interaction apparatus of the embodiment of the disclosure, the IoT platform may receive the information interaction request sent by the terminal device, send the authorization request to the first server based on the name of the first server, receive the authorization information sent by the first server, and send the control instruction for the target device to the first server, thereby achieving information interaction, so that the IoT platform may integrate multiple first servers associated with the target device and support target devices belonging to different first servers at the same time, thereby achieving the cross-server information interaction, avoiding the cumbersome operation and long time-consuming problems in the existing information interaction process, improving the efficiency of information interaction, and enhancing user experience. Furthermore, the number of controllable smart home devices may be rapidly expanded with the existing servers.

FIG. 21 is a structural schematic diagram of an information interaction apparatus according to an embodiment of the disclosure.

As illustrated in FIG. 21, the information interaction apparatus 2100 includes: an obtaining module 2110 and a generating module 2120. The obtaining module 2110 is configured to receive an interaction voice of a driver and passenger, and perform semantic analysis on the interaction voice to obtain a device identifier of a target device and a name of a first server associated with the target device. The generating module 2120 is configured to generate an information interaction request based on the device identifier and the name of the first server, and send the information interaction request to the IoT platform.

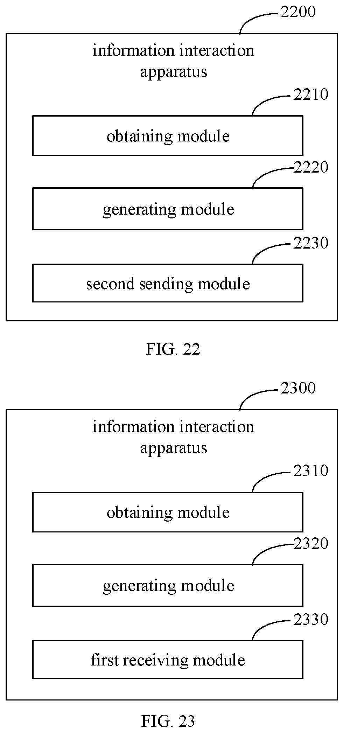

FIG. 22 is a structural schematic diagram of an information interaction apparatus according to another embodiment of the disclosure.

As illustrated in FIG. 22, the information interaction apparatus 2200 includes: an obtaining module 2210 and a generating module 2220, and a second sending module 2230. The second sending module 2230 is configured to send an interaction intention to a second server after obtaining the interaction intention, so that the second server may determine a first control instruction based on the interaction intention and a driving scene for a vehicle. The interaction intention may be obtained by performing the semantic analysis on the interaction voice.

It should be noted that the obtaining module 2210 and the generating module 2220 have the same function and structure as the obtaining module 2110 and the generating module 2220.

FIG. 23 is a structural schematic diagram of an information interaction apparatus according to another embodiment of the disclosure.

As illustrated in FIG. 23, the information interaction apparatus 2300 includes: an obtaining module 2310 and a generating module 2320, and a first receiving module 2330. The first receiving module 2330 is configured to receive a control instruction for the target device and send the control instruction to the IoT platform after sending the vehicle-home interaction request to the IoT platform.

It should be noted that the obtaining module 2310 and the generating module 2320 have the same function and structure as the obtaining module 2110 and the generating module 2120.

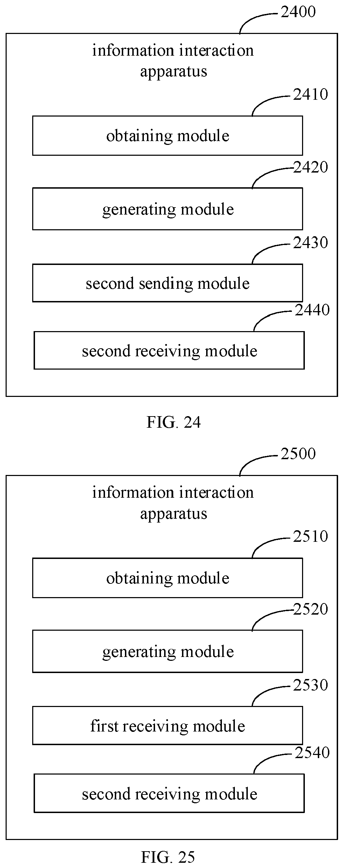

FIG. 24 to FIG. 25 are structural schematic diagrams of an information interaction apparatus according to another embodiment of the disclosure.

As illustrated in FIG. 24, the information interaction apparatus 2400 includes: an obtaining module 2410, a generating module 2420, a second sending module 2430, and a second receiving module 2440. The second receiving module 2440 is configured to receive state information of the target device fed back by the IoT platform after sending the vehicle-home interaction request to the IoT platform.

It should be noted that the obtaining module 2410, the generating module 2420, and the second sending module 2430 have the same function and structure as the obtaining module 2110, the generating module 2120, and the second sending module 2230.

As illustrated in FIG. 25, the information interaction apparatus 2500: an obtaining module 2510, a generating module 2520, a first receiving module 2530, a second receiving module 2540. The second receiving module 2540 is configured to receive state information of the target device fed back by the IoT platform after sending the vehicle-home interaction request to the IoT platform.

It should be noted that the obtaining module 2510, the generating module 2520 and the first receiving module 2530 have the same function and structure as the obtaining module 2110, the generating module 2120, and the first receiving module 2330.

According to the information interaction apparatus of the embodiment of the disclosure, the on-board device makes full use of the semantic analysis capability, so that the IoT platform may integrate multiple third-party management platforms, and support home devices belonging to different third-party management platforms at the same time, thereby achieving the cross-platform vehicle-home interaction.

According to the embodiments of the disclosure, the disclosure also provides an electronic device and a readable storage medium.

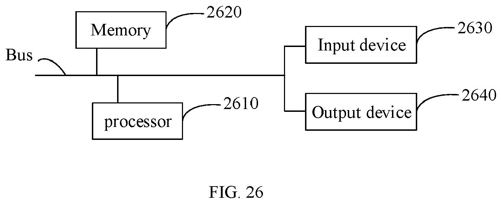

As illustrated in FIG. 26, it is a block diagram of an electronic device for a vehicle-home interaction according to an embodiment of the disclosure. Electronic devices are intended to represent various forms of digital computers, such as laptop computers, desktop computers, workstations, personal digital assistants, servers, blade servers, mainframe computers, and other suitable computers. Electronic devices may also represent various forms of mobile devices, such as personal digital processing, cellular phones, smart phones, wearable devices, and other similar computing devices. The components shown here, their connections and relations, and their functions are merely examples, and are not intended to limit the implementation of the disclosure described and/or required herein.

As illustrated in FIG. 26, the electronic device includes one or more processors 2610, a memory 2620, and interfaces for connecting various components, including a high-speed interface and a low-speed interface. The various components are interconnected using different buses and may be mounted on a common motherboard or otherwise installed as required. The processor may process instructions executed in the electronic device, including instructions stored in or on the memory to display graphical information of the GUI on an external input/output device (such as a display device) coupled to an interface. In other embodiments, if necessary, a plurality of processors and/or buses may be used with a plurality of memories and processors. Similarly, a plurality of electronic devices may be connected, each providing some of the necessary operations (for example, as a server array, a group of blade servers, or a multiprocessor system). In FIG. 26, a processor 2610 is taken as an example.

The memory 2620 is a non-transitory computer-readable storage medium according to the disclosure. The memory stores instructions executable by at least one processor, so that the at least one processor executes the information interaction method according to the disclosure. The non-transitory computer-readable storage medium of the disclosure stores computer instructions, and the computer instructions are used to cause a computer execute the information interaction method according to the disclosure.

As a non-transitory computer-readable storage medium, the memory 2620 may be configured to store non-transitory software programs, non-transitory computer executable programs and modules, such as program instructions/modules (for example, the first receiving module 1610, the sending module 1620, and the second receiving module 1630 as illustrated in FIG. 16) corresponding to the information interaction method in the embodiments of the disclosure. The processor 2610 executes various functional applications and data processing of the server by running non-transitory software programs, instructions, and modules stored in the memory 2620, that is, implementing the information interaction method in the above method embodiment.

The memory 2620 may include a storage program area and a storage data area. The storage program area may store an operating system and an application program required for at least one function. The storage data area may store data created according to the use of the positioning electronic device. In addition, the memory 2620 may include a high-speed random access memory and a non-transitory memory, such as at least one magnetic disk storage device, a flash memory device, or other non-transitory solid-state storage devices. In some embodiments, the memory 2620 may optionally include memories remotely provided with respect to the processor 2610, and these remote memories may be connected to the positioning electronic device through a network. Examples of the above networks include, but are not limited to, the Internet, corporate intranets, local area networks, mobile communication networks, and combinations thereof.

The electronic device for a vehicle-home interaction may also include: an input device 2630 and an output device 2640. The processor 2610, the memory 2620, the input device 2630, and the output device 2640 may be connected through a bus or in other manners. In FIG. 26, the connection through the bus is taken as an example.

The input device 2630 may receive input numeric or character information, and generate key signal input related to user settings and function control of the positioning electronic device, such as a touch screen, a keypad, a mouse, a trackpad, a touchpad, a pointing stick, one or more mouse buttons, trackballs, joysticks and other input devices. The output device 2640 may include a display device, an auxiliary lighting device (for example, LED), a haptic feedback device (for example, a vibration motor), and the like. The display device may include, but is not limited to, a liquid crystal display (LCD), a light emitting diode (LED) display, and a plasma display. In some embodiments, the display device may be a touch screen.

Various implementations of the systems and techniques described herein may be implemented in digital electronic circuit systems, integrated circuit systems, application specific ASICs (application specific integrated circuits), computer hardware, firmware, software, and/or combinations thereof. These various embodiments may being implemented in one or more computer programs, which may be executed and/or interpreted on a programmable system including at least one programmable processor. The programmable processor may be a dedicated or general-purpose programmable processor that may receive data and instructions from a storage system, at least one input device, and at least one output device, and transmit the data and instructions to the storage system, the at least one input device, and the at least one output device.

These computing programs (also referred to as programs, software, software applications, or codes) include machine instructions for programmable processors, and may be implemented using high-level procedures and/or object-oriented programming languages, and/or assembly/machine language. As used herein, the terms "machine-readable medium" and "computer-readable medium" refer to any computer program product, device, and/or device used to provide machine instructions and/or data to a programmable processor (for example, magnetic disks, optical disks, memories, programmable logic devices (PLDs)), including machine-readable media that receive machine instructions as machine-readable signals. The term "machine-readable signal" refers to any signal used to provide machine instructions and/or data to a programmable processor.

In order to provide interaction with the user, the systems and techniques described herein may be implemented on a computer having a display device (e.g., a Cathode Ray Tube (CRT) or a Liquid Crystal Display (LCD) monitor) for displaying information to the user; and a keyboard and a pointing device (such as a mouse or a trackball) through which the user can provide inputs to the computer. Other types of devices may also be used to provide interactions with the user. For example, the feedback provided to the user may be any form of sensory feedback (for example, visual feedback, auditory feedback, or haptic feedback). And the inputs from the user may be received in any form (including acoustic input, voice input, or haptic input).

The systems and techniques described herein may be implemented in a computing system that includes back-end components (for example, as a data server), or a computing system that includes middleware components (for example, an application server), or a computing system that includes front-end components (for example, a user computer with a graphical user interface or a web browser through which the user may interact with the implementation of the systems and techniques described herein), or a computing system that includes any combination of such back-end components, middleware components or front-end components. The components of the system may be connected to each other through any form or medium of digital data communication (for example, a communication network). Examples of communication networks include: a local area network (LAN), a wide area network (WAN), and the Internet.

The computer system can include a client and a server. The client and server are generally far away from each other and interact through a communication network. The relationship between the client and the server is generated by computer programs running on the respective computers and having a client-server relationship with each other.

According to the information interaction method of the embodiment of the disclosure, the IoT platform may receive the information interaction request sent by the terminal device, and send the authorization request to the first server based on the name of the first server, receive the authorization information sent by the first server, and send the control instructions for the target device to the first server, thereby achieving information interaction, so that the IoT platform may integrate multiple first servers associated with the target device and support target devices belonging to different first servers at the same time, thereby achieving the cross-server information interaction, avoiding the cumbersome operation and long time-consuming problems in the existing information interaction process, improving the efficiency of information interaction, and enhancing user experience. Furthermore, the number of controllable smart home devices may be rapidly expanded with the existing servers.

It should be understood that the various forms of processes illustrated above may be used to reorder, add or delete steps. For example, the steps described in the disclosure may be executed in parallel, sequentially, or in a different order, as long as the desired result of the technical solution disclosed in the invention may be achieved, which is not limited herein.

## Claims

1. An information interaction method, performed by an Internet of Things (IoT) platform, the method comprising:
receiving (S101, S401, S901, S1504) an information interaction request sent by a terminal device, wherein the information interaction request includes a device identifier (6-1, 6-3) of a target device to be interacted with the terminal device and a name (6-3, 6-4) of a first server to which the target device belongs;
sending (S102, S402, S902, S1505) an authorization request to the first server based on the name of the first server;
receiving (S103, S403, S903) authorization information sent by the first server, wherein the authorization information is generated in response to the first server determining that a login account that logs into the IoT platform is an authorized account;
receiving (S201, S701) a first control instruction sent by a second server to which the terminal device belongs, wherein the first control instruction is determined by the second server based on a driving scene for a vehicle; and
sending (S202, S702) the first control instruction for the target device to the first server, so that the first server controls the target device based on the first control instruction.

2. The method of claim 1, further comprising:
receiving (S301, S801) a second control instruction sent by the terminal device; and
sending (S302, S802) the second control instruction to the first server.

3. The method of claim 1 or 2, wherein after sending the control instruction for the target device to the first server, the method further comprises:
receiving (S905, S1404, S1507) state information of the target device fed back by the first server, and sending the state information to the terminal device.

4. The method of any one of claims 1 to 3, further comprising calling (S404, S904, S1506) the first server to perform interaction control on the target device through the first server, after receiving the authorization information.

5. An information interaction apparatus, comprising:
a first receiving module (1610, 1710, 1810, 1910, 2010), configured to receive an information interaction request sent by a terminal device, wherein the information interaction request includes a device identifier (6-1, 6-3) of a target device to be interacted with the terminal device and a name (6-3, 6-4) of a first server to which the target device belongs;
a sending module (1620, 1720, 1820, 1920, 2020), configured to send an authorization request to the first server based on the name of the first server;
a second receiving module (1630, 1730, 1830, 1930, 2030), configured to receive authorization information sent by the first server, wherein the authorization information is generated in response to the first server determining that a login account that logs into the IoT platform is an authorized account; and
a third receiving module (1740, 1940), configured to receive a first control instruction sent by a second server to which the terminal device belongs, wherein the first control instruction is determined by the second server based on a driving scene for a vehicle;
wherein the sending module is further configured to send the first control instruction for the target device to the first server, so that the first server controls the target device based on the first control instruction.

6. The apparatus of claim 5, wherein the first receiving module is configured to receive a second control instruction sent by the terminal device; and
the sending module is configured to send the second control instruction to the first server.

7. The apparatus of claim 5 or 6, wherein the second receiving module is further configured to receive state information of the target device fed back by the first server, and send the state information to the terminal device.

8. An electronic device, comprising:
at least one processor; and
a memory communicatively coupled to the at least one processor;
wherein the memory is stored with instructions executable by the at least one processor, and the instructions are executed by the at least one processor, the at least one processor is caused to execute the information interaction method according to any one of claims 1 to 4.

9. A non-transitory computer-readable storage medium having computer instructions stored thereon, wherein the computer instructions are configured to cause a computer to execute the information interaction method according to any one of claims 1 to 4.

10. A computer program product, wherein when instructions in the computer program product are executed by a processor, the information interaction method according to any one of claims 1 to 4 is implemented.

## Patentansprüche

1. Informationsinteraktionsverfahren, das von einer Internet-der-Dinge(IoT)-Plattform durchgeführt wird, wobei das Verfahren Folgendes umfasst:
Empfangen (S101, S401, S901, S1504) einer Informationsinteraktionsanfrage, die von einem Endgerät gesendet wird, wobei die Informationsinteraktionsanfrage eine Gerätekennung (6-1, 6-3) eines Zielgeräts, das mit dem Endgerät interagieren soll, und einen Namen (6-3, 6-4) eines ersten Servers, zu welchem das Zielgerät gehört, aufweist;
Senden (S102, S402, S902, S1505) einer Autorisierungsanfrage an den ersten Server basierend auf dem Namen des ersten Servers;
Empfangen (S103, S403, S903) von Autorisierungsinformationen, die von dem ersten Server gesendet werden, wobei die Autorisierungsinformationen als Reaktion darauf erzeugt werden, dass der erste Server bestimmt, dass ein Anmeldekonto, das sich bei der IoT-Plattform anmeldet, ein autorisiertes Konto ist;
Empfangen (S201, S701) einer ersten Steueranweisung, die von einem zweiten Server gesendet wird, zu welchem das Endgerät gehört, wobei die erste Steueranweisung von dem zweiten Server basierend auf einer Fahrszene für ein Fahrzeug bestimmt wird; und
Senden (S202, S702) der ersten Steueranweisung für das Zielgerät an den ersten Server, so dass der erste Server das Zielgerät basierend auf der ersten Steueranweisung steuert.

2. Verfahren nach Anspruch 1, ferner umfassend:
Empfangen (S301, S801) einer zweiten Steueranweisung, die von dem Endgerät gesendet wird; und
Senden (S302, S802) der zweiten Steueranweisung an den ersten Server.

3. Verfahren nach Anspruch 1 oder 2, wobei nach dem Senden der Steueranweisung für das Zielgerät an den ersten Server das Verfahren ferner Folgendes umfasst:
Empfangen (S905, S1404, S1507) von Zustandsinformationen des Zielgeräts, die von dem ersten Server zurückgeleitet werden, und Senden der Zustandsinformationen an das Endgerät.

4. Verfahren nach einem der Ansprüche 1 bis 3, ferner umfassend das Aufrufen (S404, S904, S1506) des ersten Servers, um eine Interaktionssteuerung auf dem Zielgerät durch den ersten Server nach dem Empfangen der Autorisierungsinformationen durchzuführen.

5. Informationsinteraktionseinrichtung, umfassend:
ein erstes Empfangsmodul (1610, 1710, 1810, 1910, 2010), das konfiguriert ist, um eine Informationsinteraktionsanfrage zu empfangen, die von einem Endgerät gesendet wird, wobei die Informationsinteraktionsanfrage eine Gerätekennung (6-1, 6-3) eines Zielgeräts, das mit dem Endgerät interagieren soll, und einen Namen (6-3, 6-4) eines ersten Servers, zu welchem das Zielgerät gehört, aufweist;
ein Sendemodul (1620, 1720, 1820, 1920, 2020), das konfiguriert ist, um eine Autorisierungsanfrage an den ersten Server basierend auf dem Namen des ersten Servers zu senden;
ein zweites Empfangsmodul (1630, 1730, 1830, 1930, 2030), das konfiguriert ist, um Autorisierungsinformationen zu empfangen, die von dem ersten Server gesendet werden, wobei die Autorisierungsinformationen als Reaktion darauf erzeugt werden, dass der erste Server bestimmt, dass ein Anmeldekonto, das sich bei der IoT-Plattform anmeldet, ein autorisiertes Konto ist; und
ein drittes Empfangsmodul (1740, 1940), das konfiguriert ist, um eine erste Steueranweisung zu empfangen, die von einem zweiten Server gesendet wird, zu welchem das Endgerät gehört, wobei die erste Steueranweisung von dem zweiten Server basierend auf einer Fahrszene für ein Fahrzeug bestimmt wird;
wobei das Sendemodul ferner konfiguriert ist, um die erste Steueranweisung für das Zielgerät an den ersten Server zu senden, so dass der erste Server das Zielgerät basierend auf der ersten Steueranweisung steuert.

6. Einrichtung nach Anspruch 5, wobei das erste Empfangsmodul konfiguriert ist, um eine zweite Steueranweisung zu empfangen, die von dem Endgerät gesendet wird; und
das Sendemodul konfiguriert ist, um die zweite Steueranweisung an den ersten Server zu senden.

7. Einrichtung nach Anspruch 5 oder 6, wobei das zweite Empfangsmodul ferner konfiguriert ist, um Zustandsinformationen des Zielgeräts zu empfangen, die von dem ersten Server zurückgeleitet werden, und die Zustandsinformationen an das Endgerät zu senden.

8. Elektronische Vorrichtung, umfassend:
mindestens einen Prozessor; und
einen Speicher, der kommunikativ mit dem mindestens einen Prozessor gekoppelt ist;
wobei der Speicher mit Anweisungen gespeichert wird, die von dem mindestens einen Prozessor ausgeführt werden können, und die Anweisungen von dem mindestens einen Prozessor ausgeführt werden, wobei bewirkt wird, dass der mindestens eine Prozessor das Informationsinteraktionsverfahren nach einem der Ansprüche 1 bis 4 ausführt.

9. Nicht-flüchtiges computerlesbares Speichermedium, auf dem Anweisungen gespeichert sind, wobei die Computeranweisungen konfiguriert sind, um zu bewirken, dass ein Computer das Informationsinteraktionsverfahren nach einem der Ansprüche 1 bis 4 ausführt.

10. Computerprogrammprodukt, wobei, wenn die Anweisungen in dem Computerprogrammprodukt von einem Prozessor ausgeführt werden, das Informationsinteraktionsverfahren nach einem der Ansprüche 1 bis 4 implementiert wird.

## Revendications

1. Procédé d'interaction d'informations, réalisé par une plate-forme de l'Internet des objets (IoT), le procédé comprenant :
la réception (S101, S401, S901, S1504) d'une demande d'interaction d'informations envoyée par un dispositif terminal, dans lequel la demande d'interaction d'informations inclut un identifiant de dispositif (6-1, 6-3) d'un dispositif cible à mettre en interaction avec le dispositif terminal et un nom (6-3, 6-4) d'un premier serveur auquel le dispositif cible appartient ;
l'envoi (S102, S402, S902, S1505) d'une demande d'autorisation au premier serveur sur la base du nom du premier serveur ;
la réception (S103, S403, S903) d'informations d'autorisation envoyées par le premier serveur, dans lequel les informations d'autorisation sont générées en réponse à la détermination, par le premier serveur, qu'un compte de connexion qui se connecte à la plate-forme IoT est un compte autorisé ;
la réception (S201, S701) d'une première instruction de commande envoyée par un deuxième serveur auquel le dispositif terminal appartient, dans lequel la première instruction de commande est déterminée par le deuxième serveur sur la base d'une scène de conduite pour un véhicule ; et
l'envoi (S202, S702) de la première instruction de commande pour le dispositif cible au premier serveur, de sorte que le premier serveur commande le dispositif cible sur la base de la première instruction de commande.

2. Procédé selon la revendication 1, comprenant en outre :
la réception (S301, S801) d'une deuxième instruction de commande envoyée par le dispositif terminal ; et
l'envoi (S302, S802) de la deuxième instruction de commande au premier serveur.

3. Procédé selon la revendication 1 ou 2, dans lequel, après l'envoi de l'instruction de commande pour le dispositif cible au premier serveur, le procédé comprend en outre :
la réception (S905, S1404, S1507) d'informations d'état du dispositif cible retournées par le premier serveur, et l'envoi des informations d'état au dispositif terminal.

4. Procédé selon l'une quelconque des revendications 1 à 3, comprenant en outre l'appel (S404, S904, S1506) du premier serveur pour réaliser une commande d'interaction sur le dispositif cible par l'intermédiaire du premier serveur, après la réception des informations d'autorisation.

5. Appareil d'interaction d'informations, comprenant :
un premier module de réception (1610, 1710, 1810, 1910, 2010), configuré pour recevoir une demande d'interaction d'informations envoyée par un dispositif terminal, dans lequel la demande d'interaction d'informations inclut un identifiant de dispositif (6-1, 6-3) d'un dispositif cible à mettre en interaction avec le dispositif terminal et un nom (6-3, 6-4) d'un premier serveur auquel le dispositif cible appartient ;
un module d'envoi (1620, 1720, 1820, 1920, 2020), configuré pour envoyer une demande d'autorisation au premier serveur sur la base du nom du premier serveur ;
un deuxième module de réception (1630, 1730, 1830, 1930, 2030), configuré pour recevoir des informations d'autorisation envoyées par le premier serveur, dans lequel les informations d'autorisation sont générées en réponse à la détermination, par le premier serveur, qu'un compte de connexion qui se connecte à la plate-forme IoT est un compte autorisé ; et
un troisième module de réception (1740, 1940), configuré pour recevoir une première instruction de commande envoyée par un deuxième serveur auquel le dispositif terminal appartient, dans lequel la première instruction de commande est déterminée par le deuxième serveur sur la base d'une scène de conduite pour un véhicule ;
dans lequel le module d'envoi est en outre configuré pour envoyer la première instruction de commande pour le dispositif cible au premier serveur, de sorte que le premier serveur commande le dispositif cible sur la base de la première instruction de commande.

6. Appareil selon la revendication 5, dans lequel le premier module de réception est configuré pour recevoir une deuxième instruction de commande envoyée par le dispositif terminal ; et
le module d'envoi est configuré pour envoyer la deuxième instruction de commande au premier serveur.

7. Appareil selon la revendication 5 ou 6, dans lequel le deuxième module de réception est en outre configuré pour recevoir des informations d'état du dispositif cible retournées par le premier serveur, et envoyer les informations d'état au dispositif terminal.

8. Dispositif électronique, comprenant :
au moins un processeur ; et
une mémoire couplée en communication à l'au moins un processeur ;
dans lequel la mémoire stocke des instructions exécutables par l'au moins un processeur, et, lorsque les instructions sont exécutées par l'au moins un processeur, l'au moins un processeur est amené à exécuter le procédé d'interaction d'informations selon l'une quelconque des revendications 1 à 4.

9. Support de stockage non transitoire lisible par ordinateur sur lequel sont stockées des instructions d'ordinateur, dans lequel les instructions d'ordinateur sont configurées pour amener un ordinateur à exécuter le procédé d'interaction d'informations selon l'une quelconque des revendications 1 à 4.

10. Produit programme informatique, dans lequel, lorsque des instructions dans le produit programme informatique sont exécutées par un processeur, le procédé d'interaction d'informations selon l'une quelconque des revendications 1 à 4 est mis en œuvre.
